# EUROPEAN PATENT SPECIFICATION

(11) **EP 2 724 880 B1**
(45) Date of publication and mention of the grant of the patent: **13.09.2017**
(21) Application number: 13189978.3
(22) Date of filing: 24.10.2013
(51) Int. Cl.: B60H 1/32, F25B 49/02, F25D 29/00

(54) **Vehicle refrigeration system and refrigeration system**
Fahrzeugkühlanlage und Kühlanlage
Système de réfrigération de véhicule et système de réfrigération

(30) Priority: 29.10.2012 JP 2012237839
(43) Date of publication of application: 30.04.2014
(73) Proprietor: MITSUBISHI HEAVY INDUSTRIES, LTD., Tokyo 108-8215 (JP)
(72) Inventor: Kai, Masakazu, TOKYO, 108-8215 (JP)
(74) Representative: Intès, Didier Gérard André

(56) References cited:
- EP-A2- 2 348 265
- WO-A1-2010/011226
- US-A- 5 860 594

## Description

### {Technical Field}

The present invention relates to a vehicle refrigeration system that cool a cargo space mounted in a vehicle, and to a refrigeration system.

### {Background Art}

In a vehicle refrigeration unit that cools a cargo space provided in a vehicle such as a temperature-controlled vehicle, moisture in the air may form frost on an evaporator that absorbs heat from the air in the cargo space. The formed frost reduces the surface area that can perform heat exchange on the surface of the evaporator and degrades heat exchanging performance, which causes deteriorated cooling performance.

Such frost formation tends to occur particularly in the case where operation of the refrigeration unit is started with the cargo space being in a high-humidity/temperature state as high as, for example, 40°C, and the cargo space is rapidly cooled to the freezing point.

Accordingly, when progress of frost formation is detected, defrosting operation is executed in the refrigeration unit so as to recover evaporator performance.

For example, PTL 1 and PTL 2 disclose methods for controlling evaporating temperature and executing defrosting operation in order to suppress expansion of a frost formation region. PTL 3 discloses a refrigeration system as recited in the preamble of claim 1.

### {Citation List}

### {Patent Literature}

{PTL 1} Japanese Unexamined Patent Application, Publication No. 2007-298218
{PTL 2} Japanese Unexamined Patent Application, Publication No. 2012-52758
{PTL 3} EP 2348265

### {Summary of Invention}

### {Technical Problem}

However, in both the conventional methods, operation in the state of lowered heat exchanging performance due to frost formation on the evaporator is permitted, which causes extremely low operating efficiency as compared with the operation in the state of no frost formation on the evaporator.

Even if defrosting operation is performed, complete removal of the formed frost takes time, and therefore deterioration in operating efficiency is unavoidable at any rate.

Further, it is necessary to provide a specific sensor that detects frost formation on the evaporator, and this incurs costs.

The present invention has been invented in view of such circumstances, and it is an object of the present invention to provide a vehicle refrigeration system and a refrigeration system capable of suppressing frost formation on the evaporator and enhancing operating efficiency at low costs.

### {Solution to Problem}

A first aspect of the present invention is a vehicle refrigeration system adapted to cool a cargo space included in a vehicle, comprising: a compressor adapted to compress gaseous refrigerant; a condenser adapted to heat-exchange high-pressure gas refrigerant with outside air to condense the gas refrigerant; an expansion valve adapted to decompress condensed liquid refrigerant; an evaporator adapted to heat-exchange decompressed low-pressure liquid refrigerant with air in the cargo space to cool the cargo space; an electric motor adapted to drive the compressor; and a control device adapted to control a number of rotations of the electric motor, wherein when air temperature of the cargo space at a start of operation is equal to or more than a reference temperature that is higher than 0°C, the control device controls the number of rotations of the electric motor to execute dehumidifying operation that cools the cargo space at an evaporating temperature that is higher than a temperature of frost formation on the evaporator, and once the temperature of the cargo space has reached a specified temperature which is higher than 0°C and lower than the reference temperature, the control device stops the dehumidifying operation and shifts from the dehumidifying operation to cooling operation that cools the cargo space to a preset temperature that is below a freezing point.

Since the amount of moisture contained in the air in the cargo space is decreased by performing dehumidifying operation in this way, frost formation is less likely to occur even when the operation is then shifted to the cooling operation to cool the space to the preset temperature that is below the freezing point. By starting the dehumidifying operation in the state of high absolute humidity (large moisture amount) and stopping the dehumidifying operation at the temperature at which the absolute humidity of the cargo space is sufficiently low and at which frost formation on the evaporator does not occur, it becomes possible to end dehumidification in a short time while acquiring high dehumidifying effects.

Herein, the reference temperature is preferably set at 20°C or higher. As the temperature of the cargo space is higher, the absolute humidity becomes higher and thereby high dehumidifying effects can be acquired.

The control device may detect opening of a door of the cargo space after start of operation, and may execute the dehumidifying operation when the air temperature of the cargo space is equal to or more than the reference temperature.

It can be considered that when the door of the cargo space opens, outside air flows inside, which may substantially increase the temperature of the cargo space and increase the amount of moisture in the air. In that case, it is effective to execute the dehumidifying operation.

If it is the case, it is also preferable to start the dehumidifying operation when the temperature of the cargo space is equal to or more than the reference temperature.

The air temperature of the cargo space is preferably equal to a temperature of discharge air from the evaporator. A discharge port of the evaporator has the lowest temperature in the cargo space and is quickest in response to temperature change at the time of operating the evaporator. Accordingly, operation control with use of the temperature of discharge air from the evaporator can particularly achieve prompt stop of the dehumidifying operation.

Further, when a state where the temperature of the cargo space has reached the specified temperature has continued for specified time or more, the control device preferably stops the dehumidifying operation and shifts from the dehumidifying operation to the cooling operation.

This makes it possible to reliably set the temperature of the entire cargo space to the specified temperature or lower, and to thereby perform reliable dehumidification.

In this case, the specified time may also be set so that the amount of discharge air from the evaporator is 1 to 10 times a capacity of the cargo space.

A second aspect of the present invention is a refrigeration system adapted to cool a cargo space, comprising a compressor adapted to compress gaseous refrigerant; a condenser adapted to heat-exchange high-pressure gas refrigerant with outside air to condense the gas refrigerant; an evaporator adapted to heat-exchange condensed liquid refrigerant with air in the cargo space to cool the cargo space; an electric motor adapted to drive the compressor; and a control device adapted to control a number of rotations of the electric motor, wherein when air temperature of the cargo space at a start of operation is equal to or more than a reference temperature that is set at 20°C or higher, the control device controls the number of rotations of the electric motor to execute dehumidifying operation that cools the cargo space at an evaporating temperature that is higher than a temperature of frost formation on the evaporator, and once the temperature of the cargo space has reached a specified temperature which is higher than 0°C and lower than the reference temperature, the control device stops the dehumidifying operation and shifts from the dehumidifying operation to cooling operation that cools the cargo space to a preset temperature that is below a freezing point.

### {Advantageous Effects of Invention}

According to the present invention, by performing dehumidifying operation prior to the cooling operation, the amount of moisture contained in the air in the cargo space is reduced before cooling operation is performed, so that frost formation is less likely to occur. By starting the dehumidifying operation in the state of high absolute humidity (large moisture amount) and stopping the dehumidifying operation at the temperature at which the absolute humidity of the cargo space is sufficiently low and at which frost formation on the evaporator does not occur, it becomes possible to end dehumidification in a short time while acquiring high dehumidifying effects. This makes it possible to enhance operating efficiency while suppressing frost formation on the evaporator.

According to such a method, it is not necessary to detect frost formation on the evaporator, and there should just be a sensor which is generally provided so as to be able to detect temperature of the cargo space. Therefore, the aforementioned effects can be achieved at low costs.

### {Brief Description of Drawings}

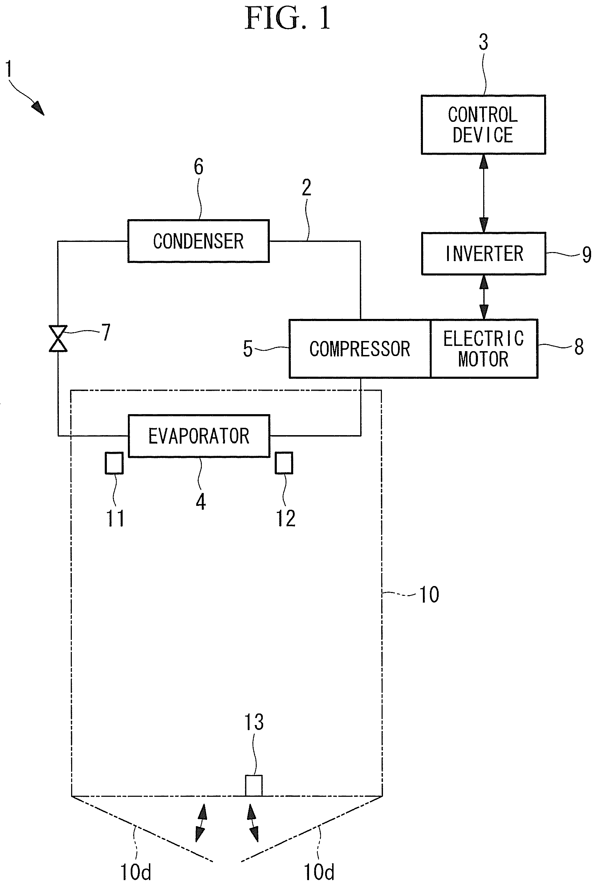

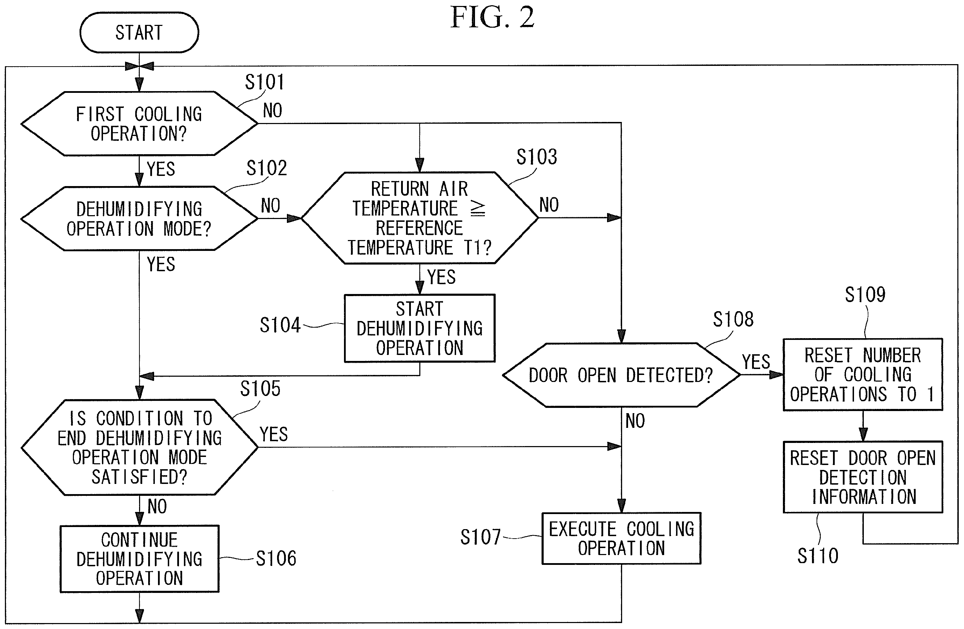

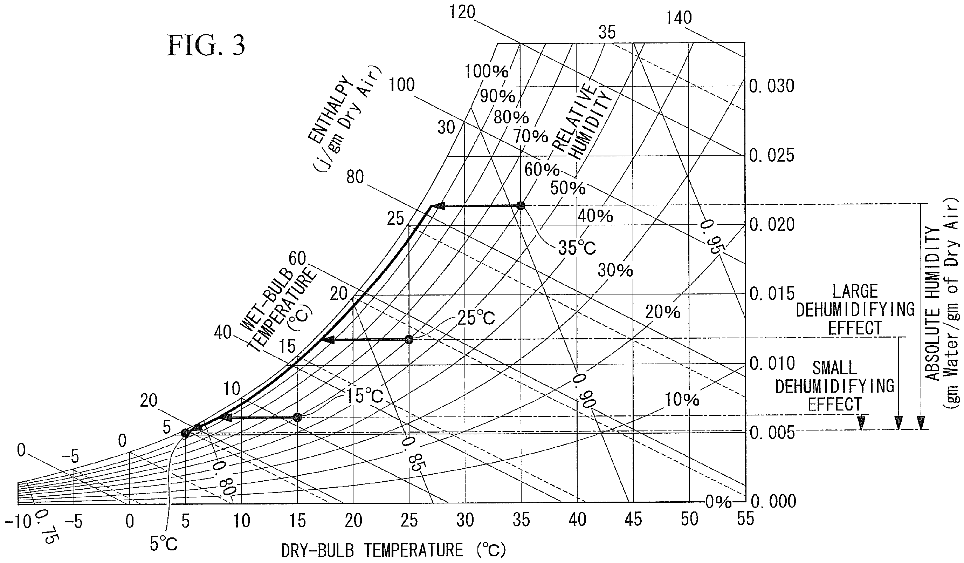

{Fig. 1} Fig. 1 is a view showing the configuration of a vehicle refrigeration unit of the present invention.
{Fig. 2} Fig. 2 is a view showing a control flow of the vehicle refrigeration unit of the present invention.
{Fig. 3} Fig. 3 is a psychrometric chart for showing difference in dehumidifying effects due to difference in dehumidifying operation starting temperature in the present invention.

### {Description of Embodiments}

One embodiment according to the present invention will be described hereinbelow with reference to the drawings.

Fig. 1 shows the configuration of a vehicle refrigeration unit 1 which is mounted in a vehicle such as a temperature-controlled vehicle to cool a cargo space 10 of the vehicle.

As shown in Fig. 1, the vehicle refrigeration unit 1 includes a refrigeration cycle 2 and a control device 3 as a main component.

The refrigeration cycle 2 includes an evaporator 4, and a compressor 5, a condenser 6, and an expansion valve 7 that supply low-temperature/low-pressure liquid refrigerant to the evaporator 4.

The compressor 5 compresses low-temperature/low-pressure gas refrigerant evaporated in the evaporator 4 by drawing heat from the cargo space 10 and sends the compressed gas refrigerant to the condenser 6 as high-temperature/high-pressure gas refrigerant. The compressor 5 is driven by the power of an electric motor (motor) 8.

For example, the condenser 6 is placed in front of an engine room and cools the high-temperature/high-pressure gas refrigerant supplied from the compressor 5 by heat-exchange with outside air so as to condense and liquefy the gaseous refrigerant. The thus-liquefied refrigerant is sent to a receiver (not shown) where vapor/liquid separation is performed, and is then sent to the expansion valve 7 as high-temperature/high-pressure liquid refrigerant. In the expansion valve 7, the high-temperature/high-pressure liquid refrigerant is decompressed and expanded into low temperature/low pressure liquid (misty) refrigerant, and is supplied to the evaporator 4.

The evaporator 4 cools the air in the cargo space 10 by heat-exchanging the supplied low-temperature/low-pressure liquid refrigerant with air in the cargo space.

As for rotation speed of the electric motor 8, the electric power supplied from, for example, a mounted battery (not shown) is variably controlled in a continuous manner or in stages by an inverter 9. Therefore, the rotation speed of the electric motor 8 is changed by changing supply power, so that the refrigerant discharge capacity of the compressor 5 is changed to adjust a circulation amount (flow rate) of refrigerant that circulates through the refrigeration cycle 2. As a result, cooling capacity of the evaporator 4 (cooling capacity of the refrigeration cycle 2) is controlled.

Action of the refrigeration cycle 2 as described in the foregoing is controlled by the control device 3. In order to execute control with the control device 3, a sensor is properly provided in each part of the refrigeration cycle 2. In the present embodiment, there are provided at least sensors 11 and 12 that detect the temperature of return air and discharge air of the evaporator 4, and a sensor 13 that detects opening of a door 10d that is for taking cargo in and out of the cargo space 10.

Hereinbelow, a method for controlling the vehicle refrigeration unit 1 of the present embodiment will be described. Fig. 2 is a view showing a control flow of the vehicle refrigeration unit 1.

As shown in Fig. 2, when the compressor 5 is turned ON to start cooling operation by circulating refrigerant through the refrigeration cycle 2, the control device 3 first determines whether or not the cooling action after the start of operation is the first operation (Step S101). Herein, the cooling action refers to turning ON the compressor 5 to feed the refrigerant to the evaporator 4 so as to cool the cargo space 10. The number of the cooling actions is counted whenever the compressor 5 is turned off and is then turned on again for such reasons as adjustment of the temperature of the cargo space 10.

If the action is the first cooling action as a result of determination in Step S101, it is then determined whether or not a dehumidifying operation mode is in operation (Step S102).

In the case of continuous operation, the dehumidifying operation mode may be in operation. However, in the case of immediately after startup, the dehumidifying operation mode is not in operation, and in that case, it is determined whether or not the temperature of return air to the evaporator 4 is equal to or more than a preset reference temperature T1 (Step S103). If the temperature is equal to or more than the reference temperature T1, the dehumidifying operation mode is started in the vehicle refrigeration unit 1 (Step S104).

In the dehumidifying operation mode, dehumidifying operation is executed so that an evaporating temperature in the evaporator 4 becomes a temperature of, for example, -2°C that is higher than the temperature of frost formation on the evaporator 4 to prevent frost formation on the evaporator 4. Adjustment of the evaporating temperature of the evaporator 4 is performed by using the inverter 9 to control the number of rotations of the electric motor 8 that drives the compressor 5. When the evaporator 4 is equipped with a motor driven fan so that air volume of the evaporator 4 can be changed, it is preferable to perform dehumidifying operation with the air volume set lowered than a rated air volume of the motor driven fan.

Herein, the reference temperature T1 used as a condition to start the dehumidifying operation mode may be set at 20°C for example. For example, as shown in the psychrometric chart of FIG. 3, when 60% RH air at a temperature of 35°C, 25°C, and 15°C is respectively cooled to a temperature of 5°C, at which absolute humidity is sufficiently low and dehumidification can be achieve without causing frost formation on the evaporator 4, a reduction amount of absolute humidity (amount of moisture) becomes larger and dehumidifying effects are enhanced as the temperature before start of cooling operation is higher. Therefore, dehumidifying operation is started from the state of high air temperature in the cargo space (hereinafter referred to as a space temperature) at which absolute humidity is high so that high dehumidifying effects can be achieved.

After the dehumidifying operation mode was started in Step S104 and when the dehumidifying operation mode was determined to be in operation in Step S102, it is determined in Step S105 whether or not a condition to end the dehumidifying operation mode is satisfied.

Examples of the condition to end the dehumidifying operation mode may include the temperature of discharge air from the evaporator 4 reaching a preset specified temperature T2 or lower. The specified temperature T2 may be a temperature that is set higher than 0°C and lower than the reference temperature T1, and more particularly the specified temperature T2 may be, for example, a temperature of 5°C at which absolute humidity is low enough to provide sufficient dehumidifying effects and at which dehumidification can be achieved without causing frost formation on the evaporator 4.

Here, in order to implement higher reliability, the condition to end the dehumidifying operation mode may be the temperature of discharge air from the evaporator 4 becoming the preset specified temperature T2 or lower and the state of the temperature being the preset specified temperature T2 or lower continuing for a specified time or more. The specified time during which the temperature of discharge air from the evaporator 4 continues to be the specified temperature T2 or lower may properly be set to, for example, 1 minute or more, or may also be set based on the number of air circulations calculated from capacity of the cargo space 10, which is the capacity of cooling target space, and volume of discharge air from the evaporator 4 (one circulation of air in the cargo space is counted when the amount of discharge air from the evaporator 4 matches the capacity of the cargo space 10).

For example, the specified time is so set that the number of air circulations is in the range of 1 to 10. In short, the specified time is so set that the volume of discharge air from the evaporator 4 is 1 to 10 times the capacity of the cargo space 10. Such setting ensures that the discharge air from the evaporator 4 reliably dehumidifies the entire freezer.

Unless the above condition to end the dehumidifying operation mode is satisfied, the dehumidifying operation mode is continued (Step S106).

While the dehumidifying operation mode is continued, the procedure proceeds to Step S102 as long as the cooling action after startup is the first action in Step S101. In Step S102, the dehumidifying operation mode is determined, and the procedure proceeds to Step S105.

On the other hand, if the above-stated condition to end the dehumidifying operation mode is satisfied in Step S105, the dehumidifying operation mode is ended and is shifted to a normal cooling operation mode (Step S107).

In the normal cooling operation mode, the preset temperature is set at a temperature below the freezing point and the cargo space 10 is cooled by the evaporator 4.

In the cooling operation mode, after the temperature of the space has reached the preset temperature over time, the compressor 5 may be turned ON and OFF in order to maintain the temperature. In such a case, the control device 3 counts the number of times of the compressor 5 being turned ON as the number of the cooling actions. Then, it is determined in Step S101 that the cooling action is not the first cooling action after startup, and so the procedure proceeds to Step S108.

In Step S108, it is determined whether or not, after the start of a series of processes, a detection signal indicating opening of the door 10d of the cargo space 10 is inputted into the control device 3. If the detection signal indicating opening of the door 10d of the cargo space 10 is not inputted as a result of determination, then the procedure proceeds to Step S107 and the cooling operation mode is continued without interruption.

On the other hand, if the detection signal indicating opening of the door 10d of the cargo space 10 was inputted in Step S108, the control device 3 resets the number of times of the cooling action being turned ON after startup to 1 (Step S109), and resets the count of the detection signals indicating opening of the door 10d to 1 (Step S110). After that, the procedure returns to Step S101. This is because when the door 10d of the cargo space 10 is opened, the space temperature substantially increases, which may make it necessary to perform dehumidification again.

In this case, in Step S101, the procedure proceeds to Step S102 since the number of the cooling actions has been reset to 1. In Step S102, since the cooling operation mode is in operation, the procedure proceeds to Step S103. If the discharge temperature of the evaporator 4 is equal to or more than the reference temperature T1 in Step S103, the dehumidifying operation mode is started in Step S104, whereas if the discharge temperature is not equal to or more than the reference temperature T1, the cooling operation mode is continued. In short, when the door 10d of the cargo space 10 is opened and the space temperature substantially increases, the dehumidifying operation is performed, whereas if the space temperature is less than the reference temperature T1, the cooling operation is continuously performed without execution of dehumidifying operation.

As described in the foregoing, high dehumidifying effects can be acquired by starting dehumidification when the discharge temperature of the evaporator 4 is equal to or more than the reference temperature T1 (for example, 20°C) at which absolute humidity is high. Once the discharge temperature of the evaporator 4 has reached the specified temperature T2 (for example, 5°C) at which absolute humidity is sufficiently low, the dehumidifying operation mode is stopped and is shifted to the normal cooling operation mode, so that the dehumidifying operation can be ended in a short time. As a consequence, the dehumidifying operation can be executed in the state of implementing high dehumidifying effects, while the dehumidifying operation can also be ended in a short time and be promptly shifted to the cooling operation mode. As a result, it becomes possible to enhance operating efficiency of the refrigeration cycle 2 while suppressing frost formation on the evaporator 4.

Further, such control can be implemented not with use of a specific sensor or the like but with use of the sensors 11 and 12 that detect return air temperature and discharge air temperature of the evaporator 4, so that low costs are achieved. Moreover, such control is also applicable to the existing vehicle refrigeration unit 1 only by updating software of the control device 3.

Further, during a series of operations of the refrigeration cycle 2, dehumidifying operation is performed only at the time when the space temperature is high at the start of operation and at the time when the door 10d of the cargo space 10 is opened and thereby the space temperature increases. Therefore, operating efficiency of the refrigeration cycle 2 can be maintained high without execution of unnecessary dehumidifying operation.

Although the temperature of discharge air from the evaporator 4 was used as the condition to end the dehumidifying operation mode, the space temperature of the cargo space 10 and the temperature of return air to the evaporator 4 may also be used. However, the space temperature of the cargo space 10 and the temperature of return air to the evaporator 4 tend to become higher than the temperature of discharge air from the evaporator 4 in the process of the space temperature decrease (temperature of discharge air from the evaporator 4 < space temperature < temperature of return air to the evaporator 4). Therefore, if the end of the dehumidifying operation mode is determined by whether or not the space temperature or the temperature of return air to the evaporator 4 is equal to or lower than the aforementioned specified temperature T2 (for example, 5°C), dehumidifying operation may be continued more than necessary under the condition of the temperature of discharge air from the evaporator 4 being 5°C or lower at which dehumidification is difficult, and this may result in deteriorated operating efficiency. Accordingly, in the case of using the space temperature or the temperature of return air to the evaporator 4, it is preferable to use as the specified temperature T2 the space temperature or the temperature of return air to the evaporator 4 when the temperature of discharge air from the evaporator 4 is, for example, 5°C.

Further, it is also possible to end the dehumidifying operation mode when, as the condition to end the dehumidifying operation mode, the temperature of discharge air from the evaporator 4 is equal to or less than the specified temperature T2 and the duration time of dehumidifying operation is the specified time or more.

Besides these, the configuration of the refrigeration cycle 2, details of control by the control device 3 and the like may appropriately be modified in the scope of the present invention.

### {Reference Signs List}

- 1: Vehicle refrigeration unit (vehicle refrigeration system)
- 2: Refrigeration cycle
- 3: Control device
- 4: Evaporator
- 5: Compressor
- 6: Condenser
- 7: Expansion valve
- 8: Electric motor
- 9: Inverter
- 11,12: Sensor
- 13: Sensor
- T1: Reference temperature
- T2: Specified temperature

## Claims

1. A vehicle refrigeration system (1) adapted to cool a cargo space included in a vehicle, wherein the refrigeration system comprises:
a compressor (5) adapted to compress gaseous refrigerant;
a condenser (6) adapted to heat-exchange high-pressure gas refrigerant with outside air to condense the gas refrigerant;
an evaporator (4) adapted to heat-exchange condensed liquid refrigerant with air in the cargo space to cool the cargo space;
an electric motor (8) adapted to drive the compressor; and
a control device (3) adapted to control a number of rotations of the electric motor (8), **characterized in that**
when air temperature of the cargo space at a start of operation is equal to or more than a reference temperature (T1) that is higher than 0°C, the control device (3) controls the number of rotations of the electric motor (8) to execute dehumidifying operation that cools the cargo space at an evaporating temperature that is higher than a temperature of frost formation on the evaporator (4), and
once the temperature of the cargo space has reached a specified temperature which is higher than 0°C and lower than the reference temperature (T1), the control device (3) stops the dehumidifying operation and shifts from the dehumidifying operation to cooling operation that cools the cargo space to a preset temperature that is below a freezing point.

2. The vehicle refrigeration system (1) according to claim 1, wherein
the reference temperature (T1) is set at 20°C or higher.

3. The vehicle refrigeration system (1) according to claim 1 or 2, wherein
the control device (3) detects opening of a door of the cargo space after start of operation, and executes the dehumidifying operation when the air temperature of the cargo space is equal to or more than the reference temperature (T1).

4. The vehicle refrigeration system (1) according to any one of claims 1 to 3, wherein
the air temperature of the cargo space is equal to a temperature of discharge air from the evaporator (4).

5. The vehicle refrigeration system (1) according to any one of claims 1 to 4, wherein
when a state where the temperature of the cargo space has reached the specified temperature has continued for specified time or more, the control device (3) stops the dehumidifying operation and shifts from the dehumidifying operation to the cooling operation.

6. The vehicle refrigeration system (1) according to claim 5, wherein
the specified time is set so that an amount of discharge air from the evaporator (4) is 1 to 10 times a capacity of the cargo space.

## Patentansprüche

1. Fahrzeugkühlsystem (1), das dafür ausgelegt ist, einen in einem Fahrzeug enthaltenen Frachtraum zu kühlen, wobei das Kühlsystem umfasst:
einen Verdichter (5), der dafür ausgelegt ist, gasförmiges Kältemittel zu verdichten,
einen Kondensator (6), der dafür ausgelegt ist, Wärme zwischen Hochdruck-Kältemittelgas und Außenluft auszutauschen, um das Kältemittelgas zu kondensieren,
einen Verdampfer (4), der dafür ausgelegt ist, Wärme zwischen kondensiertem flüssigem Kältemittel und Luft in dem Frachtraum auszutauschen, um den Frachtraum zu kühlen,
einen Elektromotor (8), der dafür ausgelegt ist, den Verdichter anzutreiben, und
eine Steuervorrichtung (3), die dafür ausgelegt ist, eine Drehzahl des Elektromotors (8) zu steuern, **dadurch gekennzeichnet, dass**,
wenn die Lufttemperatur des Frachtraums zu Betriebsbeginn gleich einer oder höher als eine Bezugstemperatur (T1) ist, die höher als 0 °C ist, die Steuervorrichtung (3) die Drehzahl des Elektromotors (8) so steuert, dass ein Entfeuchtungsvorgang ausgeführt wird, der den Frachtraum auf eine Verdampfungstemperatur kühlt, die höher ist als eine Eisbildungstemperatur am Verdampfer (4), und
sobald die Temperatur des Frachtraums eine spezifizierte Temperatur erreicht hat, die höher als 0 °C und niedriger als die Bezugstemperatur (T1) ist, die Steuervorrichtung (3) den Entfeuchtungsvorgang stoppt und von dem Entfeuchtungsvorgang zu einem Kühlbetrieb übergeht, der den Frachtraum auf eine voreingestellte Temperatur kühlt, die unterhalb eines Gefrierpunktes liegt.

2. Fahrzeugkühlsystem (1) nach Anspruch 1, wobei die Bezugstemperatur (T1) auf 20 °C oder höher eingestellt ist.

3. Fahrzeugkühlsystem (1) nach Anspruch 1 oder 2, wobei die Steuervorrichtung (3) das Öffnen einer Tür des Frachtraums nach dem Beginn des Betriebes detektiert und den Entfeuchtungsvorgang ausführt, wenn die Lufttemperatur des Frachtraums mindestens so hoch ist wie die Bezugstemperatur (T1).

4. Fahrzeugkühlsystem (1) nach einem der Ansprüche 1 bis 3, wobei die Lufttemperatur des Frachtraums gleich einer Temperatur von Abluft aus dem Verdampfer (4) ist.

5. Fahrzeugkühlsystem (1) nach einem der Ansprüche 1 bis 4, wobei, wenn ein Zustand, in dem die Temperatur des Frachtraums die spezifizierte Temperatur erreicht hat, mindestens eine spezifizierte Zeit fortbestanden hat, die Steuervorrichtung (3) den Entfeuchtungsvorgang stoppt und von dem Entfeuchtungsvorgang zum Kühlbetrieb übergeht.

6. Fahrzeugkühlsystem (1) nach Anspruch 5, wobei die spezifizierte Zeit so eingestellt ist, dass eine Abluftmenge aus dem Verdampfer (4) 1- bis 10-mal so groß ist wie das Fassungsvermögen des Frachtraums.

## Revendications

1. Système de réfrigération de véhicule (1) apte à refroidir un espace de cargaison inclus dans un véhicule, dans lequel le système de réfrigération comprend :
un compresseur (5) apte à comprimer un réfrigérant gazeux ;
un condenseur (6) apte à échanger de la chaleur d'un réfrigérant gazeux à haute pression avec de l'air extérieur pour condenser le réfrigérant gazeux ;
un évaporateur (4) apte à échanger de la chaleur d'un réfrigérant liquide condensé avec de l'air dans l'espace de cargaison pour refroidir l'espace de cargaison ;
un moteur électrique (8) apte à entraîner le compresseur ; et
un dispositif de commande (3) apte à commander un nombre de rotations du moteur électrique (8), **caractérisé en ce que**
quand une température d'air de l'espace de cargaison en début de fonctionnement est égale ou supérieure à une température de référence (T1) qui est au-dessus de 0°C, le dispositif de commande (3) commande le nombre de rotations du moteur électrique (8) pour exécuter une opération de déshumidification qui refroidit l'espace de cargaison à une température d'évaporation qui est plus élevée qu'une température de formation de givre sur l'évaporateur (4), et
une fois que la température de l'espace de cargaison a atteint une température spécifiée qui est au-dessus de 0°C et inférieure à la température de référence (T1), le dispositif de commande (3) arrête l'opération de déshumidification et passe de l'opération de déshumidification à une opération de refroidissement qui refroidit l'espace de cargaison à une température préétablie qui est en dessous d'un point de congélation.

2. Système de réfrigération de véhicule (1) selon la revendication 1, dans lequel la température de référence (T1) est établie à 20°C ou plus.

3. Système de réfrigération de véhicule (1) selon la revendication 1 ou 2, dans lequel le dispositif de commande (3) détecte l'ouverture d'une porte de l'espace de cargaison après un début d'opération, et exécute l'opération de déshumidification quand la température d'air de l'espace de cargaison est égale ou supérieure à la température de référence (T1).

4. Système de réfrigération de véhicule (1) selon l'une quelconque des revendications 1 à 3, dans lequel la température d'air de l'espace de cargaison est égale à une température d'air de refoulement de l'évaporateur (4).

5. Système de réfrigération de véhicule (1) selon l'une quelconque des revendications 1 à 4, dans lequel
quand un état où la température de l'espace de cargaison a atteint la température spécifiée a continué pendant un temps spécifié ou plus, le dispositif de commande (3) arrête l'opération de déshumidification et passe de l'opération de déshumidification à l'opération de refroidissement.

6. Système de réfrigération de véhicule (1) selon la revendication 5, dans lequel le temps spécifié est établi de telle sorte qu'une quantité d'air de refoulement de l'évaporateur (4) est de 1 à 10 fois une capacité de l'espace de cargaison.
